# DEMANDE DE BREVET EUROPEEN

(11) **EP 0 578 546 A1**
(43) Date de publication de la demande: **12.01.1994**
(21) Numéro de dépôt: 93401716.1
(22) Date de dépôt: 02.07.1993
(51) Int. Cl.: B62D 25/08, B60S 1/50

(54) **Agencement d'organes dans un compartiment moteur**

(30) Priorité: 07.07.1992 FR 9208354
(71) Demandeur: Société Anonyme dite: REGIE NATIONALE DES USINES RENAULT, F-92109 Boulogne Billancourt (FR)
(72) Inventeur: Carduner, Jean-Jacques, F-95110 Sannois (FR); Rochette, Bertrand, F-75014 Paris (FR); Chamaillard, Jean-Claude, F-94230 Chachan (FR); Pelata, Patrick, F-78280 Guyancourt (FR)
(74) Mandataire: Ernst-Schonberg, Michel

(57) **Abrégé**

Agencement d'organes dans un compartiment moteur destiné à faciliter les opérations d'entretien et de remplissage à proximité des parois latérales dudit compartiment, caractérisé par le fait que les organes (7, 9, 10, 14, 15, 16) et les orifices de remplissage (8, 11, 17) sont agencés sur deux niveaux dont l'un regroupe les organes (7, 10) accolés à la cloison (4) de séparation du compartiment moteur avec l'habitacle (2) et dont l'autre est en correspondance avec l'orifice (17) de remplissage d'huile et avec les servitudes électriques et électroniques (13, 14, 15).

## Description

L'invention concerne un agencement d'organes dans un compartiment moteur pour faciliter les opérations d'entretien et de remplissage à proximité des parois latérales dudit compartiment.

On sait que l'agencement d'organes dans un compartiment moteur, doit permettre le remplissage et le contrôle des différents niveaux de liquides.

La publication DE-A-2013638 décrit un agencement d'organes associés à des moyens de blocage et de déflexion destinés à bloquer ou à modifier la trajectoire des organes au cours de leurs déplacements consécutifs à des collisions.

La publication FR-A-1138365 décrit une disposition d'organes incluant celle de la roue de secours, dans le but d'améliorer l'écoulement de l'air de refroidissement dans le compartiment moteur.

Il est fréquent de rencontrer dans les compartiments moteurs des dispositions d'organes plus ou moins masqués par d'autres, si bien que le remplissage et les contrôles de niveaux ne peuvent pas être réalisés par le conducteur du véhicule. Le conducteur du véhicule est alors amené à repérer les organes à contrôler à l'aide de notices d'emploi et d'entretien du véhicule.

Selon l'invention, les organes et les orifices de remplissage sont agencés sur deux niveaux dont l'un regroupe les organes accolés à la cloison de séparation du compartiment moteur avec l'habitacle et dont l'autre est en correspondance avec l'orifice de remplissage d'huile et avec les servitudes électriques et électroniques.

L'agencement ainsi réalisé facilite le repérage des organes à contrôler.

L'agencement proposé présente en outre l'avantage de s'intégrer aisément dans une structure avant de véhicule dont le compartiment moteur est fermé par un couvercle qui possède une inclinaison sensiblement en correspondance avec celle du pare-brise.

D'autres caractéristiques et avantages de l'agencement apparaîtront à la lecture de la description faite en référence du dessin annexé dans lequel :
- la figure 1 est une représentation latérale du véhicule dans lequel le compartiment moteur est partiellement écorché et montre schématiquement l'agencement conforme à l'invention.
- la figure 2 est une vue en plan du compartiment moteur montrant l'agencement des organes sous le couvercle.

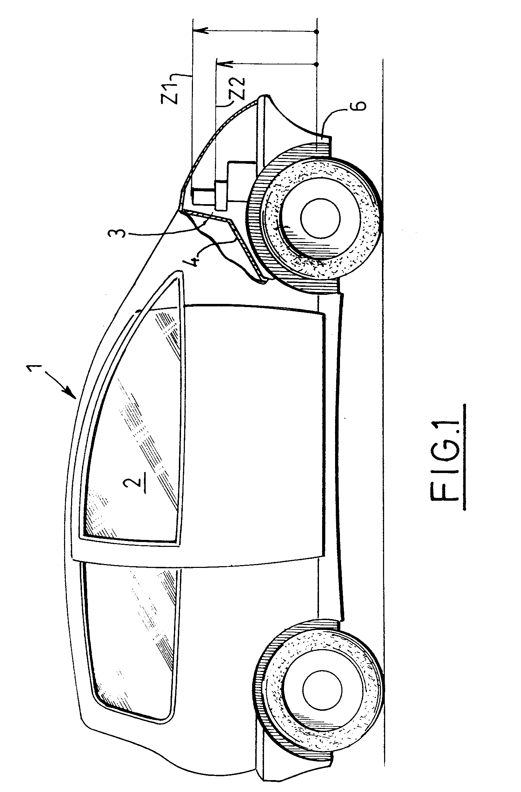

La figure 1 est une représentation latérale d'un véhicule dont la carrosserie 1 délimite essentiellement un habitacle 2 et un compartiment moteur 3.

L'habitacle 2 et le compartiment 3 sont séparés par une cloison 4 et le compartiment moteur est limité latéralement par les ailes avant 5 du véhicule et possède une traverse frontale supportant le pare-choc 6 du véhicule.

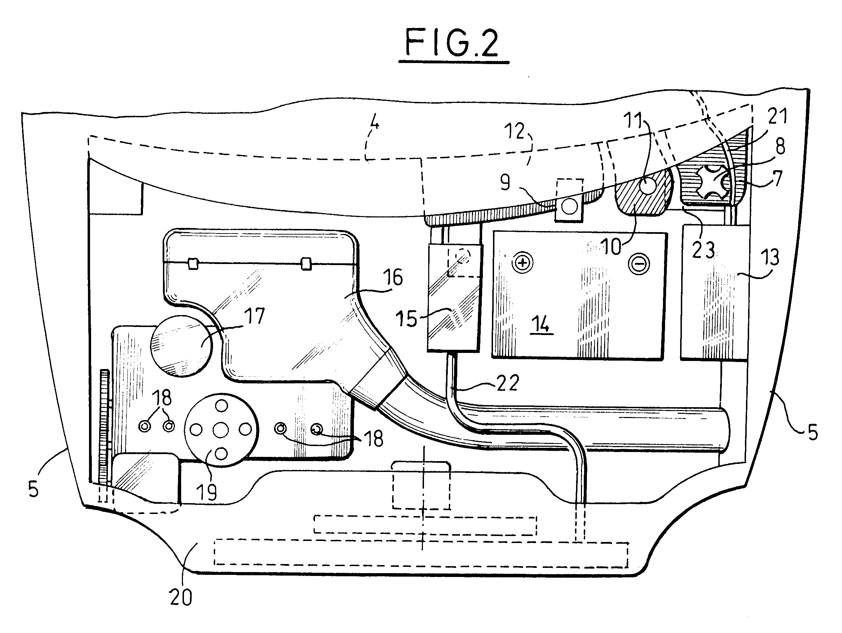

Ainsi que cela est montré à la figure 2, à la cloison 4 ont été accolés notamment:
- le vase d'expansion 7 du circuit de refroidissement du moteur qui porte un orifice de remplissage 8 à bouchon,
- le réservoir 10 d'eau du système d'essuyage qui porte un orifice de remplissage 11 à bouchon,
- le moteur d'essuie-vitre 12,
- le réservoir de liquide de frein 9.

Le vase 7, le réservoir 10, le moteur 12 le réservoir de liquide de frein 9 sont disposés sensiblement sur un même niveau Z1 dans le but de faciliter les opérations de vérification de remplissage et de mise en place au cours du processus de fabrication du véhicule.

A un niveau inférieur Z2 sont regroupés les organes tels que:
- le boîtier de contrôle 13 du circuit électrique,
- la batterie 14,
- le bloc électronique d'élaboration 15 des commandes de fonctionnement du moteur,
- le boîtier 16 du filtre à air,
- l'orifice de remplissage 17 à bouchon du carter d'huile du moteur.

Par ailleurs, les bougies 18 et le distributeur d'allumage 19 sont regroupés à proximité du plan de la traverse frontale 20.

Selon une autre caractéristique de l'agencement, les réservoirs tels que 7 et le couvercle de protection du bloc électronique 15 assurent le positionnement des canalisations 21, 22 d'alimentation des gicleurs d'essuie-vitre et du vase d'expansion 7.

Par ailleurs, dans le but de faciliter la préhension du bouchon du carter d'huile du moteur ce dernier est emboîté dans un décrochement du boîtier 16 du filtre à air.

Enfin dans le but d'assurer une assise stable aux réservoir 10 et vase 7, ceux-ci sont supportés par la chapelle 23 de montage de l'amortisseur et du ressort de suspension.

## Revendications

**1)** Agencement d'organes dans un compartiment moteur destiné à faciliter les opérations d'entretien et de remplissage à proximité des parois latérales dudit compartiment, caractérisé par le fait que les organes (7, 9, 10, 14, 15, 16) et les orifices de remplissage (8, 11, 17) sont agencés sur deux niveaux dont l'un regroupe les organes (7, 10) accolés à la cloison (4) de séparation du compartiment moteur avec l'habitacle (2) et dont l'autre est en correspondance avec l'orifice (17) de remplissage d'huile et avec les servitudes électriques et électroniques (13, 14, 15).

**2)** Agencement d'organes selon la revendication 1, caractérisé par le fait que les parties fonctionnelles des organes (10, 15) de l'un et l'autre niveau assurent le positionnement de canalisations (21, 22).

**3)** Agencement d'organes selon l'une quelconque des revendications 1 ou 2, caractérisé par le fait que l'organe (16) et orifice de remplissage (17) affectent une position emboîtée.

**4)** Agencement selon la revendication 1, caractérisé par le fait que l'un des niveaux d'agencement est défini par la chapelle 23 de montage d'organes de suspension.
